# FASCICULE DE BREVET EUROPEEN

(11) **EP 2 981 405 B1**
(45) Date de publication et mention de la délivrance du brevet: **06.06.2018**
(21) Numéro de dépôt: 14714962.9
(22) Date de dépôt: 26.03.2014
(51) Int. Cl.: B29C 65/02, F16J 12/00, B29C 53/60, B29C 63/24

(54) **LIAISON ENTRE UN LINER MÉTALLIQUE MINCE ET UNE PAROI EN COMPOSITE PAR ENDUCTION CHARGÉE DE PARTICULES THERMOPLASTIQUES**
VERBINDUNG ZWISCHEN EINER DÜNNEN METALLISCHEN BESCHICHTUNG UND EINER VERBUNDSTOFFWAND DURCH EINE WÄRMEHÄRTENDE PARTIKELGEFÜLLTE BESCHICHTUNG
LINK BETWEEN A THIN METAL LINER AND A COMPOSITE WALL BY THERMOPLASTIC PARTICLE-FILLED COATING

(30) Priorité: 03.04.2013 FR 1352986
(43) Date de publication de la demande: 10.02.2016
(73) Titulaire: ArianeGroup SAS, 75015 Paris (FR)
(72) Inventeur: LEBRUN, Hélène, F-78000 Versailles (FR); DEFOORT, Brigitte, F-33160 Saint Medard en Jalles (FR); LACOUR, Dominique, F-33370 Tresses (FR); MENOCHET, Audrey, F-33110 Le Bouscat (FR)
(74) Mandataire: Schmit, Christian Marcel Jean
(86) Numéro de dépôt international: PCT/EP2014/056030
(87) Numéro de publication internationale: WO 2014/161753

(56) Documents cités:
- EP-A2- 0 116 453
- GB-A- 1 159 972
- GB-A- 1 161 846

## Description

### DOMAINE DE L'INVENTION

L'invention concerne le domaine général de la réalisation des réservoirs en matériaux composites à hautes performances, destinés au stockage de fluides sous pression.

L'invention s'applique en particulier aux réservoirs en matériaux composites à matrice thermoplastique, mais peut être appliquée à des réservoirs en matériaux composite comportant d'autres types de matrices (polymérisables sous rayonnement, thermodurcissables, etc...

De manière plus générale, l'invention s'applique au domaine de du transport et du stockage de fluides, stockage éventuellement cryogénique, par exemple au transport de gaz liquéfié par des navires méthaniers, au stockage d'hydrogène liquide pour des applications automobiles, ou aux réservoirs d'ergols liquides de lanceurs comme le lanceur européen Ariane.

### CONTEXTE DE L'INVENTION - ART ANTERIEUR

Les réservoirs à hautes performances en matériau composite sont en général réalisés par la technique de l'enroulement filamentaire (i.e. par bobinage) de fibres (pré) imprégnées ou encore par une de ses variantes comme le placement de fibres.

On entend par réservoirs à hautes performances, des réservoirs optimisés en termes de rapport masse/résistance, tels ceux utilisés notamment dans les domaines de l'industrie spatiale et des transports au sens général.

Dans le cas particulier des applications du domaine de l'industrie spatiale, l'utilisation de réservoirs à hautes performances est induite par le besoin de stocker des gaz sous pressions, éventuellement en conditions cryogéniques, autrement dit à très basse température.

Les réservoirs composites à hautes performances, destinés notamment au stockage de fluides pressurisés, sont généralement conçus en séparant les fonctions d'étanchéité et de tenue mécanique à la pression. Un tel réservoir comporte ainsi:
- une coque en métal ou en matériau polymère, appelée "liner" chargée d'assurer le confinement du fluide, c'est-à-dire l'étanchéité du réservoir et, éventuellement, la protection chimique de la paroi en matériau composite vis-à-vis du fluide contenu;
- un revêtement en composite assurant la résistance mécanique du réservoir, résistance aux pressions internes notamment, revêtement formé de fibres déposées sur le liner par bobinage filamentaire, ou par toute méthode équivalente.
Un tel réservoir est par exemple décrit dans le document GB 1,159,972. La coque (liner) n'ayant pas de fonction mécanique, elle est en principe d'épaisseur mince, sachant que, dans un réservoir haute performance, on cherche naturellement à minimiser les masses. Cette faible épaisseur lui conférant peu de tenue mécanique, le liner est usuellement placé sur un mandrin support.

Cependant, pour des raisons de simplification de la fabrication, on peut donner au liner d'autres fonctions, en particulier au stade de la réalisation du réservoir. Ainsi, dans le cas de réservoirs de petite taille, le liner peut être utilisé comme mandrin de bobinage lors de la dépose des fibres de matériau composite. Il doit donc pouvoir supporter sans se déformer les efforts induits par la dépose des fibres, ce qui nécessite que le liner ait une épaisseur suffisante pour supporter ces efforts.

De même le liner peut être utilisé comme surface de référence de la structure composite déposée. Il doit alors pouvoir présenter une certaine rigidité.

Lorsqu'on réalise de telles structures, une problématique à prendre en compte est celle du comportement du liner au cours de l'utilisation du réservoir, qui se caractérise par des remplissages et vidanges successives, donc des mises en pression successives, ainsi que par des cycles thermiques dans le cas de fluides cryogéniques. En particulier, les opérations de vidange se traduisent par une compression du liner par la paroi en composite.

Par suite deux cas se présentent :
- soit le réservoir est de petite dimension (1 m³ typiquement). Dans un tel cas le liner peut avoir une épaisseur suffisante pour supporter cette compression sans flamber, cette épaisseur étant par exemple imposée par le principe de fabrication du liner ou encore par des caractéristiques d'utilisation du liner comme l'utilisation direct du liner comme outillage de bobinage. Il n'y a alors pas de précaution particulière à prendre concernant une liaison entre le liner et la paroi en composite.
- soit le réservoir est de grande dimension ou bien le liner est très mince ou de très faible raideur. Dans un tel cas, il ne peut pas supporter cette compression. On est alors amené à lier le liner à la paroi en composite, en général par collage.

Par conséquent il y a donc, dans bien des cas de réalisation, nécessité de pouvoir lier le liner à la paroi en composite.

Or si l'assemblage par soudage de deux matériaux composites à matrice thermoplastique haute performance fait généralement appel à des procédés d'assemblage connus (Cf. le livre de Michael J. Troughton intitulé « Handbook of plastics joining » (Plastics Design Library). ISBN: 978-1-884207-17-4), il n'existe pas, à ce jour, parmi les techniques d'assemblage connues, de technique permettant d'assembler un élément en matériau thermoplastique avec un élément en un matériau autre, polymère ou métal notamment et conférant à l'assemblage réalisé les qualités requises, en termes de tenue mécanique en particulier.

C'est notamment le cas en ce qui concerne l'assemblage du liner composant un réservoir et de la paroi de protection qui le recouvre.

### PRESENTA TION DE L'INVENTION

Un but de l'invention est de proposer une solution permettant de réaliser l'assemblage structural par soudage d'un élément en matériau thermoplastique et d'un élément en matériau polymère ou en métal.

A cet effet l'invention a pour objet un procédé pour réaliser l'assemblage entre un premier élément structural réalisé dans un premier matériau et un second élément structural réalisé en matériau composite à matrice thermoplastique. Le procédé selon l'invention comporte principalement les étapes suivantes:
- une première étape de préparation d'un revêtement, ledit revêtement étant constitué d'une résine époxyde, dans laquelle on incorpore une proportion de poudre d'un matériau thermoplastique;
- une deuxième étape d'enduction, durant laquelle on applique le revêtement sur la surface du premier élément structural;
- une troisième étape durant laquelle on procède à la polymérisation du revêtement;
- une quatrième étape, durant laquelle on réalise le soudage du premier élément structural couvert de son revêtement au second élément structural auquel il doit être assemblé.

Selon diverses dispositions éventuellement utilisées en conjonction, le procédé selon l'invention présente les caractéristiques listées ci-après.

Selon un mode de mise en oeuvre particulier, la quatrième étape comporte une opération durant laquelle on forme le second élément structural par dépose du matériau thermoplastique à la surface du premier élément structural; le soudage du premier élément structural au second élément structural étant réalisé au moment de la dépose du matériau thermoplastique à la surface du premier élément structural.

Selon une variante du mode de mise en oeuvre précédent, la formation du second élément structural étant réalisée par dépose d'un fil textile préimprégné d'une matrice thermoplastique sur la surface du premier élément structural; le soudage proprement dit est réalisé en chauffant localement les deux éléments structuraux, dans la zone de dépose du fil textile.

Selon un autre mode de mise en oeuvre particulier, la quatrième étape est réalisée en plaçant la surface du second élément structural en contact avec la surface du premier élément structural enduit de son revêtement, en plaçant les deux éléments dans une étuve, et en portant l'étuve à une température suffisante pour provoquer la fusion des matériaux thermoplastiques constituant le revêtement du premier élément structural et le second élément structural.

Selon un autre mode de mise en oeuvre particulier, le revêtement étant constitué d'un monomère thermodurcissable comportant deux composants à mélanger, l'étape de préparation du revêtement consiste à mélanger une proportion de poudre d'un matériau thermoplastique avec un des composants puis à introduire l'autre composant dans le mélange.

Selon une variante du mode de mise en oeuvre précédent, ladite poudre est constituée d'un matériau thermoplastique, choisi pour sa compatibilité avec le matériau thermoplastique constituant le second élément structural.

Selon une autre variante du mode de mise en oeuvre précédent, le second élément structural étant réalisé en composite carbone/polyamide PA12, ladite poudre de matériau thermoplastique est constituée de polyamide PA12.

Selon un autre mode de mise en oeuvre particulier, la proportion de poudre de matériau thermoplastique incorporée dans le revêtement est déterminée de façon à obtenir la résistance à la traction et le faciès de rupture après arrachement souhaités.

Selon un autre mode de mise en oeuvre particulier, l'étape d'enduction de la surface du premier élément structural par le revêtement est réalisée en déposant le mélange constituant ledit revêtement sur la surface du premier élément structural et étalant le mélange sur cette surface de façon à former une couche ayant l'épaisseur souhaitée.

Selon un autre mode de mise en oeuvre particulier, l'étape de polymérisation consiste, après enduction, à laisser la surface du premier élément structural au repos à une température donnée, pendant le temps nécessaire à la polymérisation du matériau constituant le revêtement.

Selon un autre mode de mise en oeuvre particulier, la formation du second élément structural étant réalisée par technique d'enroulement filamentaire, le premier élément structural servant de mandrin de bobinage du fil de matériau composite, les moyens d'enroulement proprement dits sont ici associés à des moyens permettant de chauffer localement la zone de dépose du fil, l'énergie thermique appliquée localement étant suffisante pour occasionner la fusion locale du matériau thermoplastique du second élément structural et du matériau thermoplastique du revêtement, de sorte que le fil formant le second élément structural se trouve soudé au revêtement qui recouvre la surface du premier éléments structural.

### DESCRIPTION DES FIGURES

Les caractéristiques et avantages de l'invention seront mieux appréciés grâce à la description qui suit, description qui s'appuie sur les figures annexées qui présentent:
- la figure1, une illustration du principe de mise en oeuvre du procédé d'assemblage selon l'invention au travers d'un exemple d'application particulier concernant la réalisation d'un réservoir comportant un liner et une paroi en composite;
- la figure 2, une illustration schématique de la structure en sandwich d'une éprouvette destinée à définir la composition optimale du revêtement destiné à être déposé sur un élément en polymère ou en métal pour permettre son assemblage par soudage avec un élément en matériau composite thermoplastique.

### DESCRIPTION DETAILLEE

Comme cela a été dit précédemment, l'objet de la présente invention est de rendre possible l'assemblage par soudage d'un premier élément, non constitué d'un matériau thermoplastique, un élément en matériau polymère ou encore un élément en métal par exemple, avec un second élément en matériau composite thermoplastique.

Il est particulièrement, mais non exclusivement, approprié pour réaliser un réservoir de fluide comportant une enveloppe interne, ou liner, destinée à contenir le fluide de manière étanche, recouverte d'une paroi mécaniquement résistante en matériau composite thermoplastique formée directement autour du liner, par la technique de l'enroulement filamentaire par exemple, l'enveloppe interne et la paroi de protection mécaniquement résistante, de natures différentes, étant assemblées par soudage l'une à l'autre.

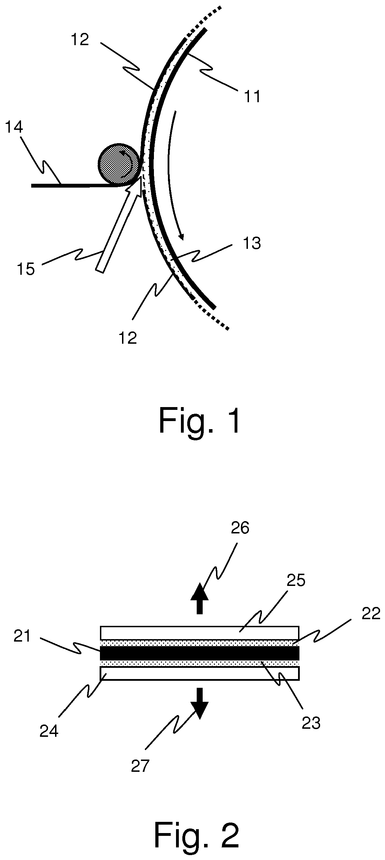

Dans la suite de la description les caractéristiques du procédé selon l'invention sont décrite au travers d'un exemple de mise en oeuvre, illustré par la figure 1, portant sur la réalisation d'un tel réservoir comportant une enveloppe interne (liner) en aluminium recouverte d'une paroi de protection mécanique réalisée dans un matériau composite thermoplastique de fibres de carbone T300 préimprégnées de résine polyamide PA12. Cependant l'homme du métier comprendra aisément à la lecture du texte qui suit que l'objet de l'invention n'est pas limité à cette seule application et que le procédé selon l'invention peut être mis en oeuvre pour assurer un assemblage par soudage de deux éléments dont l'un est réalisé en matériau composite thermoplastique et l'autre en un matériau différent.

Le procédé d'assemblage selon l'invention consiste dans un premier temps à réaliser le dépôt, sur le premier élément à assembler 11, le liner dans l'exemple présenté ici, d'un revêtement 13 en matériau de type polymère thermodurcissable comportant des charges dont la composition est proche de celle du matériau formant la matrice du matériau composite constituant le second élément 12 à assembler, la paroi du réservoir ici.

Il consiste ensuite à réaliser le soudage du revêtement 13 fixé sur le liner et du matériau composite de la paroi de protection 12, au moment où celui-ci est déposé à la surface du liner 11 pour former ladite paroi.

Par suite le procédé selon l'invention comporte principalement les étapes suivantes:
- une première étape de préparation du revêtement 13, ledit revêtement étant constitué par exemple d'une résine époxyde, de type ARALDITE® par exemple, dans laquelle on incorpore des particules de matériau thermoplastique;
- une deuxième étape d'enduction, durant laquelle on applique: le revêtement 13 sur la surface du liner 11;
- une troisième étape durant laquelle on procède à la polymérisation du revêtement 13;
- une quatrième étape, durant laquelle on réalise le soudage du liner 11 couvert de son revêtement 13 à la paroi mécaniquement résistante 12 à laquelle il doit être assemblé.

Selon l'invention, le premier élément 11 subit généralement un traitement de surface approprié au matériau dont il est constitué. L'opération de traitement de surface a pour objet de renforcer l'adhérence du revêtement 13 à la surface du premier élément, le liner 11 ici. Elle met en oeuvre à cet effet tout moyen connu approprié au matériau constituant cet élément.

Ainsi pour un liner en aluminium par exemple, cette étape peut mettre en oeuvre les opérations suivantes
- dégraissage de l'aluminium avec un solvant approprié, par exemple du methyléthylcétone (MEC);
- séchage pendant un laps de temps donné, une demi-heure par exemple;
- avivage de la face à enduire par ponçage avec un abrasif de type Scotch-Brite® jusqu'à ce que la surface soit rendue mâte,
- dégraissage de l'aluminium avec un solvant approprié, du MEC par exemple;
- séchage pendant un laps de temps donné, une demi-heure par exemple;

Alternativement, dans le cas d'alliages d'aluminium, cette opération peut mettre en oeuvre d'autres procédés comme par exemple une anodisation.

De façon à renforcer l'adhérence du revêtement 13 à la surface du liner 11, ces opérations peuvent de manière optionnelle être complétées, si nécessaire, par d'autres opérations, en particulier:
- une opération d'enduction au pinceau d'une primaire d'adhésion EC3901 de la société 3M;
- une opération de séchage d'une heure minimum à température ambiante.

L'étape de préparation du revêtement 13 consiste à constituer le mélange des composants formant ce revêtement, dans les proportions voulues. Le revêtement 13 est préférentiellement constitué d'un monomère thermodurcissable de type résine époxy comportant deux composants, une base et un durcisseur.

Pour ce faire, on mélange d'abord la base ou le durcisseur avec le matériau thermoplastique, puis on ajoute le deuxième composant de la résine juste avant l'opération d'enduction; le mélange base-durcisseur ayant une durée de vie limitée.

Le matériau thermoplastique, est ici introduit sous forme d'une poudre ayant une granulométrie donnée, de l'ordre de 50µm par exemple. Il est choisi pour sa compatibilité avec le matériau thermoplastique constituant le second élément 12.

Dans une forme de réalisation particulière, le matériau thermoplastique mélangé avec les constituants du revêtement est choisi dans le même matériau que celui qui constitue la matrice du matériau composite auquel on doit souder le liner couvert de son revêtement. Il est à noter cependant que le matériau thermoplastique utilisé peut être différent, notamment pour satisfaire au mieux la double exigence de bonne adhérence des deux matériaux thermoplastiques (i.e. celui du matériau composite de l'élément 12 et celui utilisé pour réaliser le revêtement de l'élément 11) et de bonne compatibilité du matériau thermoplastique incorporé dans le revêtement et des autres constituants du revêtement.

Par compatibilité on entend principalement, dans ce cas, une compatibilité physico-chimique entre les matériaux. Cette compatibilité se traduit par une interaction possible entre le matériau thermoplastique de la poudre incorporée et la résine dans lequel on incorpore cette poudre pour former le revêtement 13 d'une part et entre ce matériau et le matériau thermoplastique constituant la paroi 12, interaction qu'un homme du métier de la chimie des matières plastiques sait caractériser par des critères spécifiques, de nature plutôt chimique : mouillabilité, interdiffusion entre les matériaux, liaison chimiques.

Ainsi, si la paroi de protection du liner 11 est réalisée en composite carbone/polyamide PA12, on mélangera par exemple du polyamide PA12 aux composants formant la résine époxy.

Selon l'invention, la proportion de poudre de matériau thermoplastique incorporée au mélange, poudre obtenue par micronisation du matériau par exemple, est définie de façon à obtenir le collage le plus solide possible, ce critère de solidité prenant en compte à la fois la résistance à la traction de l'assemblage liner/revêtement réalisé ainsi que le faciès de rupture obtenu après rupture de l'assemblage.

Selon l'invention également, le mélange s'effectue ici en tenant compte des préconisations du fabricant (proportions, durée de vie du mélange avant polymérisation) concernant la résine époxy. De telles préconisations concernant de l'ARALDITE® AY 103, sont présentées à titre d'exemple dans le tableau ci-dessous.

| Produits | AY 103-1 (résine) | HY991 (durcisseur) | Mélange |
|---|---|---|---|
| Durée de vie (à 25°C) | | | 90 min |
| Proportions (en poids) | 100 | 40 | |

L'étape d'enduction de la surface du liner 11 par le revêtement 13 est réalisée en déposant le mélange décrit précédemment sur la surface et étalant le mélange sur cette surface de façon à former une couche de revêtement 13 ayant l'épaisseur souhaitée. La dépose peut être réalisée en utilisant, de manière connue, des outils comme des raclettes calibrées, ou des réglettes à spirales calibrées si la viscosité du mélange le permet, comme c'est notamment le cas avec l'Araldite chargée à 30% de PA12), ou tout autre outillage approprié pour étaler le revêtement 13 à la surface du liner 11. On obtient ainsi comme illustré par la figure 1, un revêtement 12 d'épaisseur sensiblement constante, typiquement de l'ordre de la centaine de microns, qui couvre toute la surface du liner 11.

Une fois la phase d'enduction terminée, la surface enduite est laissée au repos pendant le temps nécessaire à la polymérisation du revêtement 13, pendant 24 heures par exemple pour un durcissement à température ambiante. Le revêtement 13 incluant les charges est ainsi polymérisé après dépose sur la surface du liner 11 et avant le début de la dépose du matériau composite.

Selon l'invention, les paramètres relatifs au revêtement, comme sa composition, son épaisseur et les conditions de polymérisation (paramètres de mise en oeuvre) sont déduits d'essais préalables, tels que ceux comme décrits plus loin dans le texte, réalisés sur des éprouvettes de test.

Cependant, concernant l'épaisseur, celle-ci doit être supérieure à la taille des particules d'additif thermoplastique introduit dans le revêtement, tout en restant en principe faible. Ainsi, pour une épaisseur de revêtement de 100µm on choisit par exemple des particules de 50µm.

Par ailleurs, concernant les conditions de polymérisation, celles-ci sont en principe définies par le fabricant de la résine, sachant que la durée de la polymérisation diminue avec l'accroissement de la température et que le choix des conditions précises dépendant également de la pièce réelle à réaliser.

Durant la quatrième étape, on réalise le soudage du liner 11 couvert de son revêtement 13 à la paroi mécaniquement résistante à laquelle il doit être assemblé. Ce soudage est réalisé par un apport d'énergie thermique suffisant pour provoquer la fusion des matériaux thermoplastiques du composite de la paroi 12 et du revêtement 13.

Selon l'invention, et dans le cadre de la fabrication d'un réservoir notamment, le soudage du liner 11 couvert de son revêtement 13 à la paroi mécaniquement résistante 12 à laquelle il doit être assemblé est réalisé de manière simultanée avec l'opération de formation de la paroi 12 en matériau composite, la formation de la paroi 12 étant réalisée par dépose du matériau composite fil par fil et couche sur couche à la surface du liner 11. L'assemblage du liner 11 avec la paroi en composite 12 s'effectue ainsi au moment de la dépose de la première couche de matériau composite.

La formation de la paroi 12 peut être par exemple réalisée par technique d'enroulement filamentaire classique, le liner 11 servant ici de mandrin de bobinage d'un fil 14 de matériau composite. Comme l'illustre la figure 1, les moyens d'enroulement proprement dits sont alors associés à des moyens permettant de chauffer localement, dans la zone de dépose du fil 14, la surface de la structure en cours de réalisation, comme illustré par la flèche 15.

Selon l'invention, l'énergie thermique appliquée localement est suffisante pour occasionner la fusion locale de la matrice thermoplastique qui enduit les fibres du fil 14 du matériau composite déposées sur le liner 11, ou plus précisément sur le revêtement 13 couvrant le liner 11. De la sorte, la première couche de fil 14 de matériau thermoplastique déposée à la surface du liner 11 se trouve soudée avec le revêtement 13 qui recouvre ce dernier.

Selon l'invention également, l'apport d'énergie thermique peut être réalisé par tout moyen approprié permettant de réaliser une fusion locale du matériau thermoplastique, par éclairage de la zone de contact au moyen d'un faisceau laser par exemple.

En ce qui concerne un tel assemblage, un paramètre important dans l'exécution du procédé selon l'invention est constitué par la détermination des proportions de matériau thermoplastique incorporé au revêtement 13 ainsi que la granularité du matériau incorporé.

Ces paramètres, spécifiques à chaque assemblage réalisé, dépendent en particulier de la nature des éléments à assembler et ne sont généralement pas facilement déterminable avec précision de manière entièrement théorique. C'est pourquoi, on procède généralement à des essais préliminaires réalisés à partir d'éprouvettes de test telles que celle illustrée par la figure 2.

Une éprouvette de test consiste ici en une structure en sandwich formée d'une plaque 21 réalisée dans le matériau constituant le liner 11, une plaque d'aluminium par exemple, enduite sur ses deux faces d'une couche 22, 23 de revêtement, et placée entre deux plaques 24, 25 réalisées dans le matériau composite constituant la paroi mécaniquement résistante 12. Selon une variante de mise en oeuvre du procédé d'assemblage selon l'invention, variante adaptée à la réalisation d'ensemble de tailles compatibles avec une mise en étuve, la plaque 21 est soudée deux plaques 24, 25, non pas par apport local d'énergie thermique, mais en plaçant l'ensemble dans une étuve et en portant l'étuve à une température suffisante pour provoquer la fusion des matériaux thermoplastiques constituant le revêtement de la plaque 21 et les plaques 24 et 25.

Différentes éprouvettes de test sont ainsi réalisées les couches de revêtement 22 et 23 incorporant des proportions de matériau thermoplastique différentes pour chaque éprouvette et déterminées a priori. Par suite les proportions optimales de matériau thermoplastique sont déterminées en faisant subir aux différentes éprouvettes des efforts de traction, matérialisés par les flèches 26 et 27 sur la figure 2, et en retenant les proportions de matériau thermoplastique correspondant à l'éprouvette présentant les performances mécaniques les plus élevées en termes de résistance à la traction notamment.

Le tableau ci-après présente à titre d'exemple des résultats d'essais en traction portant sur des éprouvettes telles que celle illustrée par la figure 2, présentant des proportions variables de matériau thermoplastique dans le revêtement. Les essais ont ici été réalisés à température ambiante, à 20°C typiquement et à basse température, -150°C typiquement.

| **Fabricant du préimprégné** | **% PA12 (en masse)** | **Température d'essais** | **Tenue moyenne en traction (MPa)** | **Faciès de Rupture** |
|---|---|---|---|---|
| Soficar (Tory) | 40 | Ambiante | 7,67 (σ 1,96) | Rupture mixte : 50% cohésive dans le composite, 50% adhésive côté aluminium. |
| Soficar (Tory) | 40 | -150°C | 2,9 (σ 1,67) | Rupture adhésive : 50% côté aluminium, 50% côté composite |
| Soficar (Tory) | 20 | Ambiante | 10,30 (σ 1,20) | Rupture majoritairement cohésive dans le composite et minoritairement adhésive côté aluminium. |
| Soficar (Tory) | 20 | -150°C | 4,6 (σ 0,57) | Rupture mixte : 50% cohésive dans le composite, 50% adhésive côté aluminium (avec quelques fibres sur le coating). |
| Soficar (Tory) | 30 | Ambiante | 15,91 (σ 0,59) | Rupture majoritairement cohésive dans le composite et minoritairement mixte (50% cohésive, 50% adhésive côté aluminium). |
| Soficar (Tory) | 30 | -150°C | 5,8(σ 2,55) | Rupture majoritairement cohésive dans le composite et minoritairement adhésive côté aluminium |
| Suprem SA | 30 | -150°C | 5,81 (σ 1,95) | Majoritairement cohésive dans le composite et minoritairement adhésive côté aluminium |
| Suprem SA | 50 | Ambiante | 9,12 (σ 1,91) | Rupture majoritairement adhésive côté composite et minoritairement adhésive côté aluminium |

On constate, à la lecture de ce tableau, que les formulations contenant 30% de poudre micronisée de matériau thermoplastique sont satisfaisantes autant à température ambiante (résistance) qu'à température cryogénique (nature de la rupture). Par suite, dans un tel contexte, les essais réalisés conduiront à adopter une proportion de matériau thermoplastique dans le revêtement proche de 30%.

Ainsi, dans la mesure où la tenue mécanique d'une liaison soudée est très généralement supérieure à celle d'une liaison collée, le procédé d'assemblage selon l'invention se présente ainsi comme une solution d'assemblage alternative, particulièrement avantageuse, aux solutions d'assemblage par collage existantes.

Il est particulièrement bien adapté à la mise en oeuvre de la technique d'enroulement filamentaire dans la mesure où l'application de la pression sur le fil au moment de sa dépose et le chauffage local à l'endroit de la dépose sont de très courte durée, durée qui est seulement suffisante pour réaliser la fusion locale des matériaux thermoplastiques, de l'ordre de quelques millisecondes typiquement, le fil étant déposé sur le liner "à la volée".

La formation de paroi mécaniquement résistante et son assemblage au liner peuvent ainsi être avantageusement réalisés de manière simultanée, une telle simultanéité n'étant pas compatible des exigences de réalisation d'une liaison par collage entre le liner et la paroi mécaniquement résistante. En effet, pour un tel assemblage, la pression et la température doivent être maintenus pendant une durée de plusieurs minutes au minimum pour assurer la polymérisation du revêtement qui couvre le liner, polymérisation qui assure l'assemblage. La technique de l'enroulement filamentaire nécessiterait alors une post cuisson de l'ensemble de la pièce, ce qui fait disparaitre une grande partie de l'intérêt de la technologie de bobinage (ou du placement de fibre).

Elle apparait en outre bien adaptée à la réalisation d'objets, tels que des réservoirs, comportant une paroi ou enveloppe souple définissant un volume intérieur entourée d'une paroi de renfort ou de protection réalisée en matériau composite, pour lesquels il est nécessaire pour diverses raisons de solidariser les deux parois.

Après soudage, il n'y a en effet plus d'interface entre les deux éléments ainsi assemblées, du fait de la diffusion réciproque des molécules d'un des éléments de l'assemblage vers l'autre élément; contrairement à ce qui se passe dans le cas d'un collage où il y a autant d'interfaces que de couches nécessaires à la création de la liaison entre les deux éléments à assembler (couche d'adhésif, primaires d'adhésion, traitements de chaque surface à assembler, etc..).

Un tel mode d'assemblage est, en outre, avantageux dans la mesure où il permet de s'affranchir des problématiques de préparation de surface et de protections contre les pollutions, très sensibles dans le cas d'un assemblage par collage.

En outre, à la différence d'un assemblage par collage qui nécessite une mise en température des matériaux assemblés et de l'adhésif d'assemblage, et qui nécessite également que l'adhésif utilisé soit choisi de façon à ce que la température de collage ne soit pas susceptible d'entrainer une surchauffe des pièces à assembler, choix qui est parfois réalisé au détriment de la performance de la liaison collée finale, l'assemblage par soudage n'est avantageusement pas soumis à des exigences de compatibilité thermique.

## Revendications

1. Procédé pour réaliser l'assemblage entre un premier élément structural (11) constitué par un liner de réservoir réalisé dans un premier matériau et un second élément structural (12) réalisé en matériau composite à matrice thermoplastique, **caractérisé en ce qu'**il comporte les étapes suivantes:
- une première étape de préparation d'un revêtement (13), ledit revêtement étant constitué d'une résine époxyde, dans laquelle on incorpore une poudre de particules d'un matériau thermoplastique;
- une deuxième étape d'enduction, durant laquelle on applique le revêtement (13) sur la surface du premier élément structural (11);
- une troisième étape durant laquelle on procède à la polymérisation du revêtement (13);
- une quatrième étape, durant laquelle on réalise le soudage du premier élément structural (11) couvert de son revêtement (13) au second élément structural (12) auquel il doit être assemblé.

2. Procédé selon la revendication 1, **caractérisé en ce que** la quatrième étape comporte une opération durant laquelle on forme le second élément structural (12) par dépose du matériau thermoplastique à la surface du premier élément structural (11); le soudage du premier élément structural (11) au second élément structural (12) étant réalisé au moment de la dépose du matériau thermoplastique à la surface du premier élément structural (11).

3. Procédé selon l'une des revendications 1 ou 2, **caractérisé en ce que** la formation du second élément structural (12) étant réalisée par dépose d'un fil textile (14) préimprégné d'une matrice thermoplastique sur la surface du premier élément structural (11); le soudage proprement dit est réalisé simultanément à la formation du second élément structural (12) en chauffant localement (15) les deux éléments structuraux, dans la zone de dépose du fil textile (14).

4. Procédé selon la revendication 1, **caractérisé en ce que** la quatrième étape est réalisée en plaçant la surface du second élément structural (12) en contact avec la surface du premier élément structural (11) enduit de son revêtement (13), en plaçant les deux éléments dans une étuve, et en portant l'étuve à une température suffisante pour provoquer la fusion des matériaux thermoplastiques constituant le revêtement (13) du premier élément structural (11) et le second élément structural (12).

5. Procédé selon l'une quelconque des revendications 1 à 4, **caractérisé en ce que**, le revêtement (13) étant constitué d'un monomère thermodurcissable comportant deux composants à mélanger, l'étape de préparation du revêtement consiste à mélanger une proportion de poudre d'un matériau thermoplastique avec un des composants puis à introduire l'autre composant dans le mélange.

6. Procédé selon la selon l'une quelconque des revendications précédentes, **caractérisé en ce que** ladite poudre est constituée d'un matériau thermoplastique, choisi pour sa compatibilité avec le matériau thermoplastique constituant le second élément structural (12) et avec les autres constituants du revêtement (13).

7. Procédé selon la revendication 6, **caractérisé en ce que** le second élément structural (12) étant réalisé en composite carbone/polyamide PA12, ladite poudre de matériau thermoplastique est constituée de polyamide PA12.

8. Procédé selon l'une quelconque des revendications précédentes, **caractérisé en ce que** la proportion de poudre de matériau thermoplastique incorporée dans le revêtement (13) est déterminée de façon à obtenir la résistance à la traction et le faciès de rupture après arrachement souhaités.

9. Procédé selon l'une quelconque des revendications précédentes, **caractérisé en ce que** l'étape d'enduction de la surface du premier élément structural (11) par le revêtement (13) est réalisée en déposant le mélange constituant ledit revêtement (13) sur la surface du premier élément structural (11) et étalant le mélange sur cette surface de façon à former une couche ayant l'épaisseur souhaitée.

10. Procédé selon l'une quelconque des revendications précédentes, **caractérisé en ce que** la phase de polymérisation consiste, après enduction, à laisser la surface du premier élément structural (11) au repos à une température donnée, pendant le temps nécessaire à la polymérisation du matériau constituant le revêtement (13).

11. Procédé selon l'une quelconque des revendications précédentes, **caractérisé en ce que**, la formation du second élément structural (12) étant réalisée par technique d'enroulement filamentaire, le premier élément structural (11) servant de mandrin de bobinage du fil de matériau composite, les moyens d'enroulement proprement dits sont ici associés à des moyens permettant de chauffer localement la zone de dépose du fil (14), l'énergie thermique appliquée localement étant suffisante pour occasionner la fusion locale du matériau thermoplastique du second élément structural (12) et du matériau thermoplastique du revêtement (13), de sorte que le fil (14) formant le second élément structural (12) se trouve soudé au revêtement (13) qui recouvre la surface du premier élément structural (11).

## Patentansprüche

1. Eine Methode, die Verbindung zwischen einem ersten strukturellen Element (11), bestehend aus der Innenhülle eines Tanks, die aus Ausgangsmaterial gefertigt ist, und einem zweiten strukturellen Element (12), hergestellt aus thermoplastischem Matrixverbundstoff, verbindet, **dadurch gekennzeichnet, dass** sie folgende Schritte umfasst:
- ein erster Schritt zur Vorbereitung einer Beschichtung (13), besagte Beschichtung besteht aus einem Epoxidharz, in das Teilchen eines thermoplastischen Materialpulvers eingearbeitet sind;
- ein zweiter Beschichtungsschritt, während dessen die Beschichtung (13) auf die Oberfläche des ersten strukturellen Elements (11) aufgebracht wird;
- ein dritter Schritt, in dem die Beschichtung (13) polymerisiert wird;
- ein vierter Schritt, in dem das erste strukturelle Element (11) das mit seiner Beschichtung (13) überzogen ist, an das zweite strukturelle Element (12) geschweißt wird, mit dem es zusammengesetzt werden muss.

2. Methode gemäß Anspruch 1, **dadurch gekennzeichnet, dass** der vierte Schritt einen Vorgang beinhaltet, bei dem das zweite strukturelle Element (12) durch Ablagerung des thermoplastischen Materials auf der Oberfläche des ersten strukturellen Elements (11) aufgebaut wird; Schweißen des ersten strukturellen Elements (11) auf das zweite strukturelle Element (12) zum Zeitpunkt, an dem das thermoplastische Material auf der Oberfläche des ersten strukturellen Elements (11) abgelagert wird.

3. Methode gemäß Anspruch 1 oder 2, **dadurch gekennzeichnet, dass** das Bauen des zweiten strukturellen Elements (12) durch Ablagerung eines Textilgarns (14) erfolgt, das mit einer thermoplastischen Matrix auf der Oberfläche des ersten strukturellen Elements (11) vorimprägniert ist; das eigentliche Schweißen wir zeitgleich während des Baus des zweiten strukturellen Elements (12) durch lokale Erwärmung (15) der beiden strukturellen Elemente im Bereich, in dem das Textilgarn angebracht wird (14), vorgenommen.

4. Methode gemäß Anspruch 1, **dadurch gekennzeichnet, dass** der vierte Schritt durch Platzieren des zweiten strukturellen Elements (12) in Kontakt mit der Oberfläche des ersten strukturellen Elements (11) vorgenommen wird, das mit seiner Beschichtung (13) überzogen ist, beide Elemente werden in einen Ofen gegeben und die Temperatur des Ofens ausreichend erhöht, damit das thermoplastische Material schmilzt, aus dem die Beschichtung (13) des ersten strukturellen Elements (11) und des zweiten strukturellen Elements (12) besteht.

5. Methode gemäß einem der Ansprüche 1 bis 4, **dadurch gekennzeichnet, dass** die Beschichtung (13) aus einem aus zwei zu mischenden Komponenten eines erstellten wärmehärtbarem Monomer besteht, der Schritt zur Vorbereitung der Beschichtung besteht im Mischen des Verhältnisses eines thermoplastischen Materialpuders mit einem der Komponenten, danach wird die andere Komponente in die Mischung eingebracht.

6. Methode gemäß jedem der vorherigen Ansprüche, **dadurch gekennzeichnet, dass** besagtes Puder aus thermoplastischem Material hergestellt ist, das aufgrund seiner Kompatibilität mit dem thermoplastischem Material, aus welchem das zweite strukturelle Element (12) besteht und seiner Kompatibilität mit anderen Bestandteilen der Beschichtung (13) gewählt wurde.

7. Methode gemäß Anspruch 6, **dadurch gekennzeichnet, dass** das zweite strukturelle Element (12) aus Kohlenstoff/PA12 Polyamid-Verbundstoff und besagtem thermoplastischem Materialpuder aus Polyamid PA12 hergestellt ist.

8. Methode gemäß jedem der vorherigen Ansprüche, **dadurch gekennzeichnet, dass** ein Teil des thermoplastischen Materialpuders, der in die Beschichtung (13) eingearbeitet ist, so festgelegt ist, dass die Zugfestigkeit und das Frakturbild nach dem Abreißen beibehalten wird.

9. Prozess gemäß jedem der vorherigen Ansprüche, **dadurch gekennzeichnet, dass** der Schritt aus der Beschichtung der Oberfläche des ersten strukturellen Elements (11) besteht, wobei die Beschichtung (13) durchgeführt wird, dass die Mischung, aus der besagte Beschichtung (13) besteht, auf die Oberfläche des ersten strukturellen Elements (11) aufgetragen wird, und die Mischung auf besagter Oberfläche so verteilt wird, dass sie eine Schicht von der gewünschten Dicke bildet.

10. Prozess gemäß jedem der vorherigen Ansprüche, **dadurch gekennzeichnet, dass** die Polymerisationsphase nach der Beschichtung daraus besteht, dass die Oberfläche des ersten strukturellen Elements (11) bei einer bestimmten Temperatur für die Zeit ruht, die zur Polymerisierung des Materials, aus dem die Beschichtung (13) besteht, notwendig ist.

11. Methode gemäß jedem der vorherigen Ansprüche, **dadurch gekennzeichnet, dass** der Aufbau des zweiten strukturellen Elements (12) durch ein Wickelverfahren ausgeführt wird, bei dem das erste strukturelle Element (11) als Drahtwicklung-Dorn für das Verbundmaterial dient, die Wicklungs-Mittel selbst werden hier mit Mitteln in Verbindung gebracht, um den Ablagebereich des Garns (14) örtlich zu erhitzen, die örtlich eingesetzte Wärmeenergie muss ausreichend hoch sein, um ein örtliches Schmelzen des thermoplastischen Materials des zweiten strukturellen Elements (12) zu veranlassen sowie des thermoplastischen Materials der Beschichtung (13), damit der Draht (14) der das zweite strukturelle Element (12) bildet, auf die Beschichtung (13) geschweißt wird, die die Oberfläche des ersten strukturellen Elements (11) bedeckt.

## Claims

1. A method for making the connection between a first structural element (11) consisting of a tank liner made of a primary material and a second structural element (12) made of thermoplastic matrix composite material, **characterized in that** it comprises the following steps:
- an initial step of preparing a coating (13), said coating consisting of an epoxy resin, in which particles of a thermoplastic material powder is incorporated;
- a second coating step, during which the coating (13) is applied to the surface of the first structural element (11);
- a third step during which the coating (13) is polymerized;
- a fourth step, during which the first structural element (11) covered with its coating (13) is welded to the second structural element (12) to which it must be assembled.

2. Method according to claim 1, **characterized in that** the fourth step includes an operation during which the second structural element (12) is built by depositing the thermoplastic material on the surface of the first structural element (11); welding of the first structural element (11) onto the second structural element (12) at the time the thermoplastic material is deposited on the surface of the first structural element (11).

3. Method according to claim 1 or 2, **characterized in that** building of the second structural element (12) is done through depositing a textile yarn (14) pre-impregnated with a thermoplastic matrix on the surface of the first structural element (11); the actual welding being performed simultaneously during the building of the second structural element (12) by locally heating (15) the two structural elements, in the area where the textile yarn is applied (14).

4. Method according to claim 1, **characterized in that** the fourth step is performed by placing the surface of the second structural element (12) in contact with the surface of the first structural element (11) coated with its coating (13), placing both elements in an oven, and raising the oven to a temperature sufficient to cause melting of the thermoplastic materials constituting the coating (13) of the first structural element (11) and the second structural element (12).

5. Method according to any one of claims 1 to 4, **characterized in that**, the coating (13) consisting of a thermosetting monomer made up of two components to be mixed, the step of preparing the coating consists in mixing a proportion of a thermoplastic material powder with one of the components, then introduce the other component into the mixture.

6. Method according to any one of the preceding claims, **characterized in that** said powder is made up of a thermoplastic material chosen for its compatibility with the thermoplastic material constituting the second structural element (12) and with the other constituents of the coating (13).

7. The method according to claim 6, **characterized in that** the second structural element (12) is made of a carbon/PA12 polyamide composite, said thermoplastic material powder being made up of polyamide PA12.

8. Method according to any one of the preceding claims, **characterized in that** the proportion of thermoplastic material powder incorporated in the coating (13) is determined in order to obtain the required tensile strength and fracture pattern after tear off.

9. Process according to any one of the preceding claims, **characterized in that** the step consisting of coating the surface of the first structural element (11) with the coating (13) is carried out by depositing the mixture constituting said coating (13), on the surface of the first structural element (11) and spreading the mixture on that surface so as to form a layer that has the desired thickness.

10. Process according to any one of the preceding claims, **characterized in that** the polymerization phase consists, after coating, of leaving the surface of the first structural element (11) at rest at a given temperature for the time necessary for the polymerization of the material constituting the coating (13).

11. Method according to any one of the preceding claims, **characterized in that** building of the second structural element (12) is being carried out by filament winding technique, the first structural element (11) serving as a wire winding mandrel for the composite material, the winding means themselves being associated here with means to locally heat the yarn deposit zone (14), the locally applied thermal energy being sufficient to cause local melting of the thermoplastic material of the second structural element (12) and of the coating's thermoplastic material (13), so that the wire (14) forming the second structural element (12) is welded to the coating (13) which covers the surface of the first structural element (11).
